# EUROPEAN PATENT SPECIFICATION

(11) **EP 4 102 338 B1**
(45) Date of publication and mention of the grant of the patent: **08.10.2025**
(21) Application number: 21750467.9
(22) Date of filing: 29.01.2021
(51) Int. Cl.: G06F 1/16, H04B 5/00, G01S 5/16

(54) **ELECTRONIC DEVICE AND METHOD FOR PROVIDING POSITION OF USER**
ELEKTRONISCHE VORRICHTUNG UND VERFAHREN ZUR BEREITSTELLUNG DER POSITION EINES BENUTZERS
DISPOSITIF ÉLECTRONIQUE ET PROCÉDÉ POUR FOURNIR LA POSITION D'UN UTILISATEUR

(30) Priority: 05.02.2020 KR 20200013750
(43) Date of publication of application: 14.12.2022
(73) Proprietor: Samsung Electronics Co., Ltd., Suwon-si, Gyeonggi-do 16677 (KR)
(72) Inventor: UHM, Junwhon, Suwon-si, Gyeonggi-do 16677 (KR); KIM, Jaewon, Suwon-si, Gyeonggi-do 16677 (KR); LEE, Yunguk, Suwon-si, Gyeonggi-do 16677 (KR)
(74) Representative: Gulde & Partner
(86) International application number: PCT/KR2021/001215
(87) International publication number: WO 2021/157964

(56) References cited:
- KR-A- 20140 054 611
- KR-A- 20190 029 052
- KR-A- 20190 110 859
- KR-B1- 101 669 520
- US-A1- 2014 118 631
- US-A1- 2015 097 719
- US-A1- 2018 093 177

## Description

### [Technical Field]

Various embodiments according to the disclosure relate to a wearable device, and more particularly, to an electronic device and a method for providing a position between users wearing wearable devices.

### [Background Art]

Virtual reality (VR) refers to technology that artificially makes a virtual environment which is similar to a real environment but does not really exist, by using an electronic device such as a computer. An instruction which is physically inputted by using a computer may establish a virtual environment on a computer, and a user may experience the virtual environment through a separate electronic device in real time. Augmented reality (AR) refers to technology that synthesizes virtual things or information and a real-world environment and makes them look like they really exist in the real world.

Typically, VR and AR may be implemented through a head mounted display (HMD). The HMD is a display device that is worn on user's head and directly shows an image in front of user's eyes.

In performing VR and AR, a technique for tracking a position of a device that a user wears is referred to as position tracking. Position tracking may be divided into an inside-out method and an outside-in method according to a position of a camera or a sensor. The inside-out method is a method for tracking a change in a relative position of a device to a surrounding environment by using a camera or a sensor attached to the tracked device (for example, an HMD). The outside-in method is a method for tracking a position of a device by using a camera or a sensor fixed to a certain place within a space where VR and AR are implemented.

VR and AR may be easily accessed in the field of entertainment such as games or videos, and recently, there is a growing interest in multi-user play which enables multiple users to enjoy a content all together.

### [Disclosure of Invention]

### [Technical Problem]

When multiple users execute a multi-user content through VR and AR, positions of the users which are updated according to motions should be reflected on the content in real time so as to increase users' immersiveness.

Typically, users' positions may be tracked through the outside-in method, but, when a user leaves a detection region of a camera or a sensor, it is impossible to track the position of the user. In addition, when the number of users executing a multi-user content in the same space increases, there is a high possibility that a user is hidden by another user, and accordingly, there may be a limit to the number of users who can participate in the content.

When users' positions are tracked through the inside-out method, position information may be acquired by performing communication based on a cloud server. Therefore, there may be a problem of delay in communication, and a content may not be executed in an off-line state.

In various embodiments according to the disclosure, when a multi-user content is executed in VR and AR, position tracking of a plurality of users may be efficiently implemented by using not only a camera but also an antenna performing wireless communication.

A prior art of US 2015/097719 A1 entitled "system and method for active reference positioning in an augmented reality environment" discloses a system where each head mounted display, HMD, receives positioning information on other HMDs either from a centralized console or from the respective other HMDs.

Another prior art US 2014/118631 A1 entitled "head mounted display and method of outputting audio signal using the same" discloses a the HMD that can detect the location information of the external digital device 200 using at least one antenna.

### [Solution to Problem]

In an embodiment, an electronic device may include: a camera; a plurality of antenna modules; a communication module configured to perform wireless communication by using signals; and at least one processor operatively connected with the camera, the plurality of antenna modules, and the communication module, and the at least one processor may be configured to: acquire signal information by receiving signals resulting from reflection of signals transmitted from the plurality of antenna modules by a surrounding environment; acquire a position of the electronic device based on the acquired signal information; acquire image information on at least one external electronic device through the camera; acquire a position of the at least one external electronic device at a first time point, based on the image information and the signal information; perform short-range communication with the at least one external electronic device, through a first antenna module that is close to the at least one external electronic device among the plurality of antenna modules; and receive position information of the at least one external electronic device at a second time point after the first time point from the at least one external electronic device through the short-range communication.

In an embodiment, an operating method of an electronic device may include: acquiring signal information by receiving signals resulting from reflection of signals transmitted from a plurality of antenna modules by a surrounding environment; acquiring a position of the electronic device based on the acquired signal information; acquiring image information on at least one external electronic device through a camera; acquiring a position of the at least one external electronic device at a first time point, based on the image information and the signal information; performing short-range communication with the at least one external electronic device, through a first antenna module that is close to the at least one external electronic device among the plurality of antenna modules; and receiving position information of the at least one external electronic device at a second time point after the first time point from the at least one external electronic device through the short-range communication.

### [Advantageous Effects of Invention]

According to various embodiments of the disclosure, the electronic device and the method may provide positions of users of a plurality of wearable devices in executing a multi-user content. In various embodiments of the disclosure, the electronic device and the method may use not only a camera but also an antenna performing wireless communication in tracking a position of a user, so that heat and power consumption of the electronic device may be reduced.

### [Brief Description of Drawings]

FIG. 1 is a perspective view of a wearable electronic device according to an embodiment;
FIG. 2 is a block diagram of an electronic device according to an embodiment;
FIG. 3 is a view illustrating an environment in which a multi-user content is executed according to an embodiment;
FIG. 4 is a flowchart for acquiring position information of a first user and a second user through an antenna module and a camera according to an embodiment;
FIG. 5A is a view illustrating a position state of an electronic device at a position setup step on coordinates according to an embodiment;
FIG. 5B is a view illustrating a multi-user content screen which reflects a position of a user according to an embodiment;
FIG. 6 is a flowchart of a communication setup between a first user and a second user and a subsequent operation according to an embodiment;
FIG. 7 is a view illustrating a state in which positions of a first user and a second user are tracked at a step of executing a multi-user content according to an embodiment;
FIG. 8 is a block diagram of an electronic device in a network environment according to an embodiment;
FIG. 9 is a block diagram of an electronic device for supporting legacy network communication and 5G network communication according to various embodiments; and
FIG. 10 is a view illustrating a structure of an antenna module according to an embodiment.

### [Best Mode for Carrying out the Invention]

An electronic device in the following descriptions is a kind of wearable electronic device, and may include a head mounted display (HMD) device which is mounted on user's head and causes a motion of the device according to a motion of the head, an audio output device (for example, a headphone or an earphone), or smart glasses.

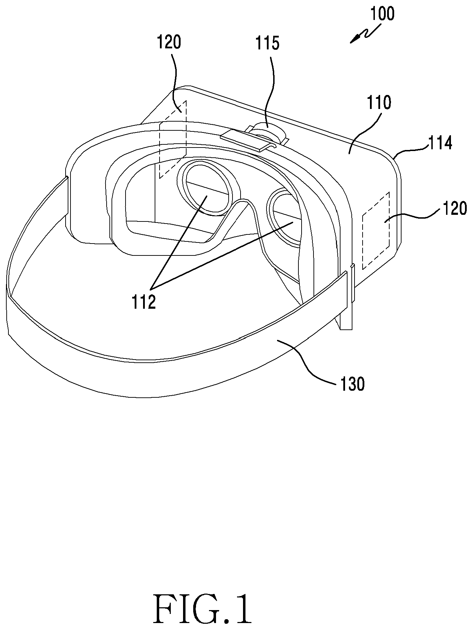

FIG. 1 is a perspective view of a wearable electronic device according to an embodiment.

Referring to FIG. 1, the wearable electronic device 100 may include a body 110 and a connector 130. In an embodiment, the connector 130 may have a structure or a shape that is connected to the body 110 to fix to a part of user's body (for example, head, etc.). The connector 130 may be generally referred to as a strap.

In an embodiment, the body 110 may include a display 114 disposed on a front surface thereof. In an embodiment, a lens unit 112 may be disposed on the body 110, and a user may view an image displayed on the display 114 through the lens unit 112. In an embodiment, the display 114 may display different images on a left lens and a right lens of the lens unit 112. For example, the wearable electronic device 100 may display a left-eye image to be recognized by user's left eye on an area of the display 114 that corresponds to the left lens of the lens unit 112, and may display a right-eye image to be recognized by user's right eye on an area that corresponds to the right lens of the lens unit 112. The display 114 displays the left-eye image and the right-eye image which are different, thereby making the user wearing the wearable electronic device 100 feel a sense of depth. In an embodiment, when the wearable electronic device 100 is a device that supports VR, the wearable electronic device 100 may implement VR within a virtual 3-dimensional (3D) space through the left-eye image and the right-eye image. In another embodiment, when the wearable electronic device 100 is a device that supports AR, the wearable electronic device may synthesize virtual things or information and a real-world environment, and may provide the synthesized image to the user.

In an embodiment, the wearable electronic device 100 may adjust an image displayed on the display 114 to be clear by adjusting a focus adjustment module 115, and may provide the image to the user.

In an embodiment, the wearable electronic device 100 may include an antenna module 120 disposed on a side surface of the body 110. In an embodiment, the wearable electronic device 100 may receive data from an external device through the antenna module 120, and may transmit data to an external device. For example, the antenna module 120 may receive, from an external device (or a server), a content to provide to the user of the wearable electronic device 100. In addition, the antenna module 120 may transmit information regarding a position and a motion of the user to an external device so as to reflect position information and motion information of the user on a content. In an embodiment, the wearable electronic device 100 may include at least one antenna module 120 disposed on a side surface of the connector 130.

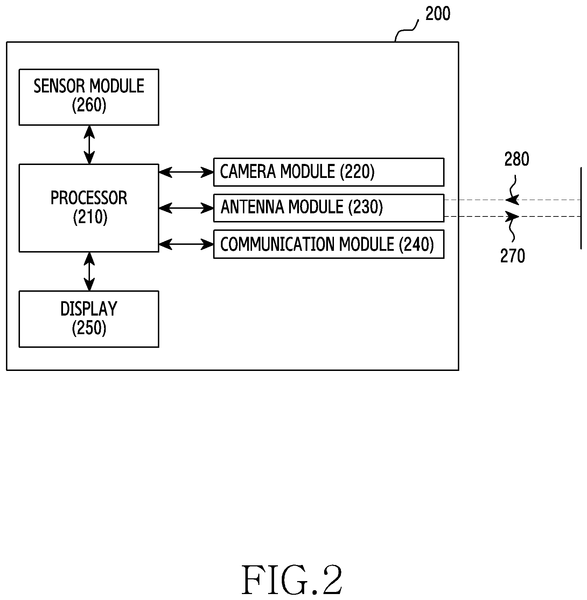

FIG. 2 is a block diagram of an electronic device according to an embodiment.

Referring to FIG. 2, the electronic device 200 may include a processor 210, a camera module 220, an antenna module 230 (for example, the antenna module 120 of FIG. 1), a communication module 240, a display 250 (for example, the display 114 of FIG. 1), and a sensor module 260. The electronic device 200 of FIG. 2 may correspond to the wearable electronic device 100 mentioned in FIG. 1. Accordingly, elements which are the same as, correspond to, or are similar to those described in FIG. 1 will not be described.

In an embodiment, the camera module 220 may shoot a still image and make a video regarding a surrounding environment. For example, the camera module 220 may shoot a change in the surrounding environment caused by a motion of a user as a still image and/or a video. The camera module 220 may identify position information (for example, distance information or direction information) of another user wearing an external electronic device, based on the shot still image and/or video.

In an embodiment, the antenna module 230 may transmit a signal to an outside (for example, an external electronic device), or may receive a signal from an outside. In an embodiment, the electronic device 200 may include a transceiver to control the antenna module 230 and to process a signal. In an embodiment, the antenna module 230 may emit a transmission signal 270 to an outside, and may receive a reflection signal 280 resulting from reflection of the transmission signal 270 by an external object. In an embodiment, the antenna module 230 may perform tracking of the electronic device 200, based on the received reflection signal 280. In an embodiment, the antenna module 230 may include an mmWave antenna module which uses a high-frequency band. For example, the mmWave antenna module may use a frequency band of 60 GHz. In an embodiment, the antenna module 230 may be configured in the form of an array, and accordingly, may concentrically transmit signals in a specific direction through a beamforming technique. For example, the antenna module 230 may receive a reflection signal resulting from reflection of a signal transmitted through the beamforming technique, and may grasp a position of an external object and a characteristic (for example, a shape or change) of the external object.

In an embodiment, the communication module 240 may support communication performance between the electronic device 200 and an external electronic device through the antenna module 230. The communication module 240 may be referred to as a communication circuit. In an embodiment, the communication module 240 may include a short-range wireless communication module which performs P2P communication through a wireless local area network (WLAN) communication channel. For example, the communication module 240 may transmit and receive data (for example, signal information, image information) to and from an external electronic device which forms a P2P group with the electronic device 200.

In an embodiment, the display 250 may display a content that is stored in the electronic device 200, or may display a content that is received from an external device (or server) by the communication module 240. In an embodiment, the display 250 may display a result of reflecting motions of users tracked by the processor 210 through the antenna module 230 on a content. A multi-user content may be played by two or more users, and may be updated by reflecting motions (for example, moving, rotation, or input) performed by different users, substantially at the same time. For example, when two or more users execute a multi-user content, the electronic device 200 may grasp a user's position through the antenna module 230 and/or the sensor module 260, and may receive a position of another user through the antenna module 230. The processor 210 may display the content reflecting the position information of the user and another user received through the display 250. The electronic device 200 may provide the content reflecting the position of the user or another user to the user, thereby enhancing user's immersiveness on a virtual reality environment.

In an embodiment, the sensor module 260 may measure a physical quantity or detect an operational state of the electronic device 200, and may convert the measured or detected information into an electric signal. The sensor module 260 may include, for example, an acceleration sensor, a gyro sensor, a geomagnetic sensor, or an atmospheric pressure sensor. The sensor module 260 may further include a control circuit to control at least one sensor belonging thereto. According to an embodiment, the sensor module 260 may acquire motion information of the electronic device 200 or may grasp whether the user wears the electronic device 200, by using sensing data acquired through at least one sensor included in the sensor module 260. In an embodiment, the processor 210 may determine movement information or direction change information of the electronic device 200, based on a signal received from the sensor module 260, and may provide a content based on the determined movement information or direction information to the user through the display 250.

In an embodiment, the processor 210 may measure a distance between the electronic device 200 and an external environment, through the transmission signal 270 emitted by the antenna module 230 and the received reflection signal 280. For example, the processor 210 may calculate a delay time between transmission and reception or a reduced strength of a signal, through the transmission signal 270 and the reflection signal 280. The processor 210 may measure a distance between the electronic device 200 and a reflection point (for example, another user, a wall, or an object) through the delay time between transmission and reception or the reduced strength of the signal.

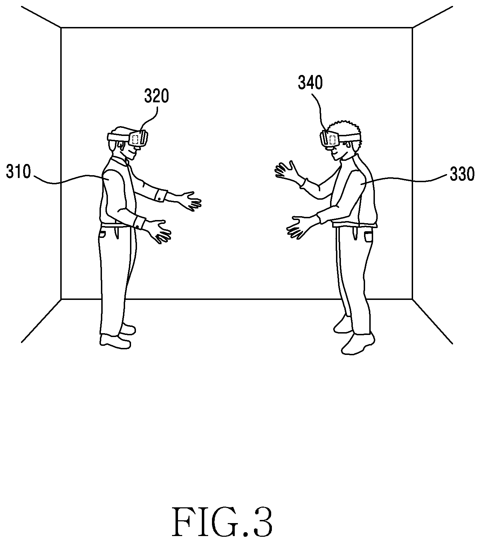

FIG. 3 illustrates an environment in which a multi-user content is executed according to an embodiment.

Referring to FIG. 3, a plurality of users (for example, a first user 310 and a second user 330) may execute the same multi-user content by using their respective electronic devices (for example, a first electronic device 320 and a second electronic device 340). In an embodiment, when another user is positioned within a specific range (for example, within 15 m), an electronic device may maintain a simultaneous access state with an electronic device worn by another user in the multi-user content. In an embodiment, when the multi-user content is executed in the first electronic device 320 used by the first user 310 and the second electronic device 340 used by the second user 330, the first electronic device 320 worn by the first user 310 may grasp position information of the first user 310 through an antenna module (for example, the antenna module 230 of FIG. 2) and/or a sensor module (for example, the sensor module 260 of FIG. 2). In an embodiment, the first electronic device 320 may detect whether there exists an electronic device (for example, the second electronic device 340) of another user within a specific range through the antenna module (for example, the antenna module 230 of FIG. 2). In an embodiment, when the first electronic device 320 detects the presence of the second electronic device 340, the first electronic device 320 may display a notification indicating that the second user 330 accesses the multi-user content on a display (for example, the display 114 of FIG. 1) of the first electronic device 320. For example, the first electronic device 320 may receive, from the second electronic device 340, information regarding whether the second user 330 wears the second electronic device 320, and/or information regarding whether the second user 330 executes the multi-user content, and may provide the information to the first user 310. In an embodiment, the second electronic device 340 worn by the second user may also grasp position information of the second user 330, and may detect whether there exists an electronic device of another user (for example, the first electronic device 320) within a specific range.

In an embodiment, the first electronic device 320 may acquire position information and/or motion information of the second user 330. In an embodiment, the position information and/or motion information may be acquired based on image information which is acquired through a camera (for example, the camera module 220 of FIG. 2) and signal information which is acquired through the antenna module (for example, the antenna module 230 of FIG. 2). In an embodiment, the first electronic device 320 may acquire a distance of the second user to the first user and/or a direction by combining the acquired image information and signal information. In an embodiment, the first electronic device 320 may acquire the motion information of the second user by combining the acquired image information and signal information. In an embodiment, the motion information may refer to a state of the user including a stationary state, a sedentary state, and a moving state. For example, the stationary state and the sedentary state may include a lying state, a sitting state and a standing state, and the moving state may include a walking state and a running state.

In an embodiment, an electronic device (for example, the first electronic device 320 of FIG. 3) may include: a camera (for example, the camera module 220 of FIG. 2); a plurality of antenna modules (for example, the antenna module 230 of FIG. 2); a communication module (for example, the communication module 240 of FIG. 2) configured to perform wireless communication by using signals; and at least one processor (for example, the processor 210 of FIG. 2) operatively connected with the camera, the plurality of antenna modules, and the communication module, and the at least one processor may be configured to: acquire signal information by receiving signals (for example, the reflection signal 280 of FIG. 2) resulting from reflection of signals (for example, the transmission signal 270 of FIG. 2) transmitted from the plurality of antenna modules by a surrounding environment; acquire a position of the electronic device based on the acquired signal information; acquire image information on at least one external electronic device (for example, the second electronic device 340 of FIG. 3) through the camera; acquire a position of the at least one external electronic device at a first time point, based on the image information and the signal information; perform short-range communication with the at least one external electronic device, through a first antenna module that is close to the at least one external electronic device among the plurality of antenna modules; and receive position information of the at least one external electronic device at a second time point after the first time point from the at least one external electronic device through the short-range communication.

In an embodiment, the at least one processor may be configured to acquire a relative position of the at least one external electronic device to the electronic device, based on the position information of the at least one external electronic device at the first time point and the second time point.

In an embodiment, the at least one processor may be configured to transmit the acquired relative position of the at least one external electronic device to the at least one external electronic device through the short-range communication.

In an embodiment, the at least one processor may be configured to acquire the position of the electronic device through a second antenna module that is not close to the at least one external electronic device among the plurality of antenna modules.

In an embodiment, in performing the short-range communication with the at least one external electronic device through the first antenna module, the at least one processor may be configured to: scan the at least one external electronic device; generate a P2P group with the scanned at least one external electronic device; and perform P2P communication with the at least one external electronic device.

In an embodiment, the at least one processor may be configured to receive the position information of the at least one external electronic device at designated intervals after the second time point.

In an embodiment, the at least one processor may be configured to receive motion information of a user wearing the at least one external electronic device from the at least one external electronic device through the short-range communication, along with the position information of the at least one external electronic device at the second time.

In an embodiment, the motion information may include a stationary state, a sedentary state, a moving state of the user.

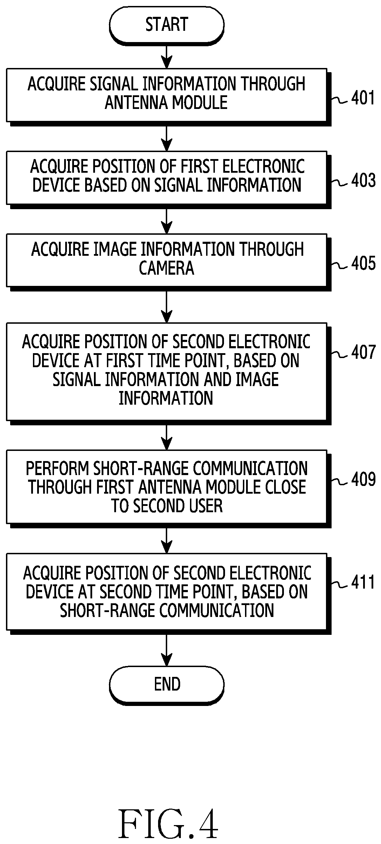

FIG. 4 is a flowchart for acquiring position information of a first user and a second user through an antenna module and a camera according to an embodiment.

Referring to FIG. 4, in action 401, a first electronic device (for example, the first electronic device 320 of FIG. 3) may acquire signal information through an antenna module (for example, the antenna module 230 of FIG. 2). In an embodiment, when the antenna module 230 corresponds to an mmWave antenna module, the first electronic device 320 may include at least two antenna modules. Since an mmWave signal transmitted and received through the mmWave antenna module does not penetrate the human body or a reference value regarding a specific absorption rate (SAR) of electromagnetic waves absorbed into the human body is defined, one mmWave antenna module may operate only within a range corresponding to about 180° of an environment surrounding the user. In an embodiment, the first electronic device 320 including at least two antenna modules may control respective antenna modules to emit signals toward the surrounding environment, and to receive reflected signals from the surrounding environment. For example, the first electronic device 320 may divide a surrounding region of the first electronic device 320 into a plurality of regions with reference to the plurality of antenna modules of the first electronic device 320, and may transmit beamformed signals to the plurality of divided regions by using the antenna modules, and may receive signals resulting from reflection of the transmitted signals by an external object.

In an embodiment, in action 403, the first electronic device 320 may acquire position information of the first electronic device (for example, the first electronic device 320 of FIG. 3), based on the signal information acquired through the antenna module. For example, the first electronic device 320 may receive signals resulting from reflection of signals beamformed and transmitted, and may measure a distance between the first electronic device 320 and a reflection point (for example, another user, a wall, or an object) through a delay time between transmission and reception or a reduced strength of a signal. When the first electronic device 320 is in a sealed space (for example, a room), the first electronic device 320 may acquire position information in the sealed space.

In an embodiment, in action 405, the first electronic device 320 may acquire image information through a camera (for example, the camera module 220 of FIG. 2) of the first electronic device 320. In an embodiment, the first electronic device 320 may detect whether there exists another user (for example, the second user 330 of FIG. 3) to execute the multi-user content together, through the acquired image information. For example, the first electronic device 320 worn by the first user 310 may grasp a position of the first electronic device 320 in the surrounding environment through the signal acquired through the antenna module in action 403, and may identify the second electronic device 340 worn by the second user 330 from the surrounding environment through the image information acquired through the camera in action 405.

In an embodiment, in action 407, the first electronic device 302 may acquire position information of the second electronic device 340 at a first time point, based on the signal information and the image information. In an embodiment, the first time point may refer to a time point at which the second electronic device (for example, the second electronic device 340 of FIG. 3) performs an initial position setup of the second user. For example, the first time point may be a time point at which the first electronic device 320 executes the multi-user content or performs an operation for grasping an initial position of the second electronic device 340. In an embodiment, the first electronic device 320 may acquire position information and/or motion information of the second electronic device 340, by combining the signal information of the antenna module and the image information of the camera. For example, the first electronic device 320 may acquire position data regarding a distance of the second user 330 from the first user 310, or a direction, and/or motion data of the second user 330, by combining the signal information and the image information, and may store the position data and/or the motion data in a memory. The action of acquiring the position information and/or the motion information by combining the signal information and the image information may be referred to as an action of acquiring position information and/or motion information based on the signal information acquired through the antenna module and the image information acquired through the camera module.

In an embodiment, in action 409, the first electronic device 320 may perform short-range communication through an antenna module that is close to the second user 330. In an embodiment, the first electronic device 320 including at least two antenna modules may identify an antenna module disposed close to the second user 330, based on the position information of the second electronic device 340 acquired in action 407. For example, being close to the second user 330 may mean that a line of sight (LOS) is guaranteed between the antenna module and the second user 330. The antenna module of the first electronic device 320 that is disposed close to the second user 330 may be referred to as a first antenna module. In an embodiment, the first electronic device 320 may perform short-range communication with the second electronic device 340 worn by the second user 330 through the first antenna module of the first electronic device. In an embodiment, the short-range communication may include P2P communication through a WLAN communication channel. In an embodiment, in action 411, the first electronic device 320 may acquire position information of the second electronic device 340 at a second time point, based on the short-range communication. For example, the second time point may be a time point for updating the ongoing multi-user content based on position information of the first electronic device 320 and the second electronic device 340 and/or motion information of the first user and the second user, according to connection of the short-range communication between the first electronic device 320 and the second electronic device 340. In an embodiment, the second time point may refer to a time point at which short-range communication is connected between the first electronic device 320 and the second electronic device 340. However, in various embodiments, the second time point may refer to a time point that is set according to user's setting, certain setting in an electronic device, or manufacturer's setting.

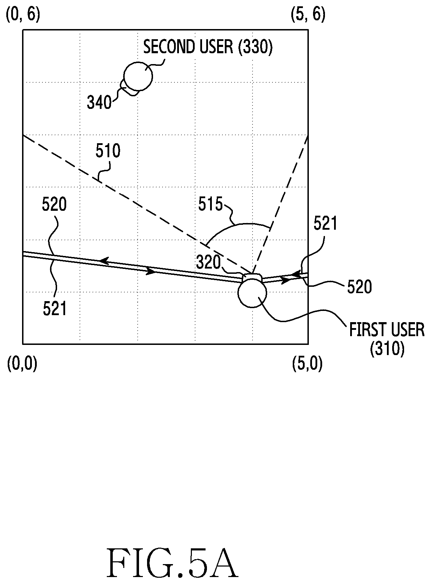

FIG. 5A illustrates a position state of an electronic device at a position setup step on coordinates according to an embodiment. The coordinates may be determined based on a map that is made by the first electronic device 320 scanning a surrounding environment and measuring a distance. **In** an embodiment, the first electronic device 320 may set a reference point based on the map made for the surrounding environment. For example, the first electronic device 320 may detect a corner point from the made map, and may set the corner point as an initial reference point (for example, a point corresponding to coordinates (0, 0)). **In** another example, the first electronic device 320 may set a point at which the first electronic device 320 is positioned as an initial reference point.

Referring to FIG. 5A, the first user 310 may be positioned at a point corresponding to coordinates (4, 1), and the second user 330 may be positioned at a point corresponding to coordinates (2, 5). **In** an embodiment, the first electronic device 320 worn by the first user 310 may emit a beamformed signal 520 in a designated direction through an antenna module (for example, the antenna module 230 of FIG. 2), and may receive a reflected signal 521. In an embodiment, the first electronic device 320 may receive the signals 521 resulting from reflection of the beamformed and transmitted signals 520 on a reflection point (for example, another user, a wall, or an object), and may measure a distance between the first electronic device 320 and the reflection point through a delay time between the transmitted signal 520 and the reflected signal 521, or a reduced strength of a signal. For example, the first electronic device 320 may acquire information indicating that the first user 310 is positioned at a point corresponding to coordinates (4, 1), through signal information acquired through the antenna module 230. In an embodiment, the first electronic device 320 may identify presence of the second user 330 wearing the second electronic device 340 in image information 510 regarding a surrounding environment which is acquired through a camera (for example, the camera module 220 of FIG. 2). In an embodiment, the first electronic device 320 may identify the presence of the second user 330 through the camera, and may acquire distance information between the first user 310 and the second user 330 through the antenna module. For example, the first electronic device 320 may grasp that the second user 330 is positioned within a photographing region 515 (for example, a field of view (FOV)) of the camera 220. For example, the first electronic device 320 may acquire distance information (for example, relative coordinates) between the first user 310 and the second user 330 through the antenna module, and may grasp that the second user 330 is positioned at a point corresponding to relative coordinates (-2, 4) from the first user 310. In another embodiment, the first electronic device 320 may scan surroundings of the first electronic device 320 through a plurality of antenna modules. For example, the first electronic device 320 may transmit beamformed signals in all directions (for example, 360°) with reference to the first electronic device 320, and may receive signals resulting from reflection of the transmitted signals, thereby detecting an object positioned around the first electronic device 320 (for example, a wall, an object, or another user). The first electronic device 320 may provide a guide for the camera 220 of the first electronic device 320 to face a region where another user of the detected objects is detected. For example, the first electronic device 320 may display a direction that is predicted as a position of the camera 220 of the first electronic device 320 and/or the second user 330 on the display 250. The first electronic device 320 may acquire information (for example, the image information 510) regarding the second user 330 through the camera 220.

In an embodiment, the first electronic device 320 may acquire the image information 510 acquired through the camera 220 and signal information acquired through the antenna module 230 in sequence, and may combine the information, or may acquire simultaneously and combine.

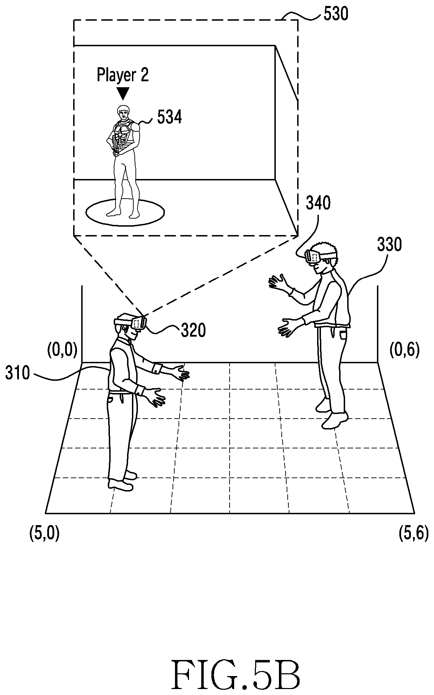

FIG. 5B illustrates a multi-user content screen which reflects a position of a user according to an embodiment. Regarding explanation of FIG. 5B, contents that correspond to, are the same as or are similar to the above-described contents will not be described.

Referring to FIG. 5B, the first electronic device 320 may acquire position information of the first electronic device 320 and the second electronic device 340, and may reflect the position information on the multi-user content. In an embodiment, the first electronic device 320 may acquire position information of the second electronic device 340 by fusing image information 510 acquired through a camera (for example, the camera module 220 of FIG. 2) and signal information acquired through an antenna module (for example, the antenna module 230 of FIG. 2).

In an embodiment, the first electronic device 320 may display a state of the second user 330 by reflecting the acquired position information. In an embodiment, when the first electronic device 320 and the second electronic device 340 access the multi-user content, the first electronic device 320 may display an access state (for example, "Player 2") of the second user wearing the second electronic device 340 on a display 530 (for example, the display 250 of FIG. 2). In addition, the first electronic device 320 may display the acquired position information (for example, position information of the second user 330 wearing the second electronic device 340 in a real environment) of the second electronic device 340 at a corresponding point on a VR content displayed on the display 530. In an embodiment, the first electronic device 320 may display a character 534 corresponding to the second user at the corresponding point on the VR content.

In an embodiment, the first electronic device 320 may display the character 534 corresponding to the second user 330 by reflecting a direction and a distance of the second user 330 to the first user 310. In an embodiment, when the first user 310 wearing the first electronic device 320 does not face the second user 330 and stands facing a wall, the first electronic device 320 may display the character 534 corresponding to the second user 330 on the display 430, by reflecting relative coordinates including direction information and distance information of the second user 330. For example, when the second user 330 is positioned at a point corresponding to relative coordinates (-2, 4) from the first user 310, the first electronic device 320 may display the second user 330 to be positioned on a left side on the display.

In an embodiment, when the first user 310 wearing the first electronic device 320 rotates (for example, changes the direction of the user or rotates head wearing the first electronic device 320), the first electronic device 320 may generate new coordinates data by reflecting a rotation angle of the first user 310. The first electronic device 320 may display the character 534 corresponding to the second user 330 by reflecting relative coordinates of the second user 330 (or the second electronic device 340) which are acquired from the new coordinates. For example, when the first user 310 rotates to face the second user 330 (for example, rotate to the left by 30°), the first electronic device 320 may display the second user 330 to be positioned on a center on the display. According to an embodiment, when a measurement value acquired through a sensor module (for example, the sensor module 260 of FIG. 2) is greater than or equal to a predetermined value, the first electronic device 320 may remeasure a direction of the second user 330. According to another embodiment, the first electronic device 320 may remeasure the direction of the second user 330 at designated intervals. According to still another embodiment, the first electronic device 320 may measure the direction of the second user 330 based on an event occurring on the displayed content, or may measure the direction of the second user 330 based on communication information received from the second user 330.

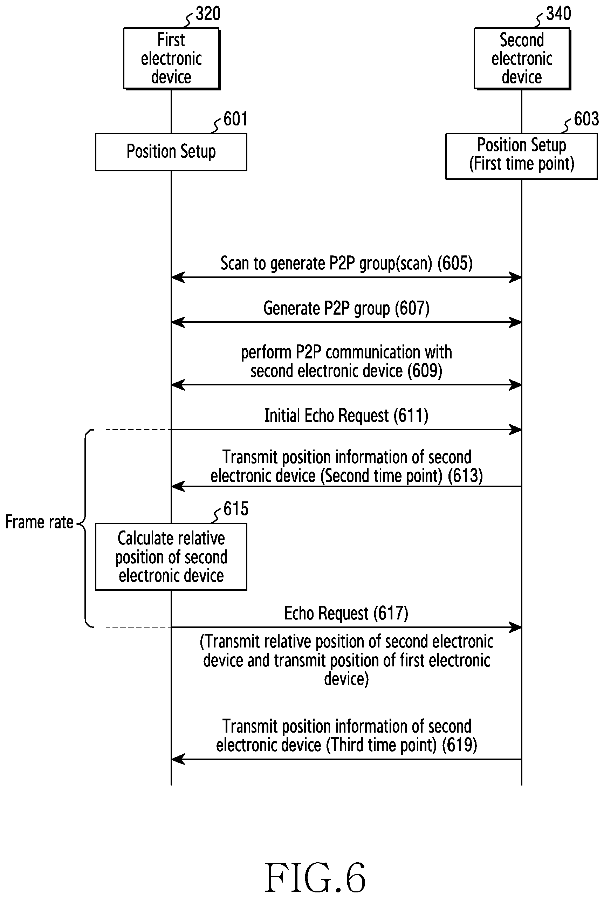

FIG. 6 illustrates a flowchart illustrating a communication setup between a first user and a second user and a subsequent operation according to an embodiment. Regarding explanation of FIG. 6, contents that correspond to, are the same as, or are similar to the above-described contents will not be described.

Referring to FIG. 6, in action 601, the first electronic device 320 worn by the first user may perform a position setup step of acquiring position information of the first electronic device 320. In another embodiment, the first electronic device 320 may acquire not only the position information of the first electronic device 320 but also relative position information of the second electronic device 340, through the position setup step. In an embodiment, in action 603, the second electronic device 340 worn by the second user 330 may perform a position setup step of acquiring position information of the second electronic device 340. In an embodiment, the position setup step of the second electronic device 340 may be a step of acquiring position information of the second electronic device 340 at a first time point. In another embodiment, the second electronic device 340 may acquire not only the position information of the second electronic device 340, but also relative position information of the first electronic device 320.

In an embodiment, in action 605, the first electronic device 320 and the second electronic device 340 may perform a scan operation of scanning each other. For example, the first electronic device 320 and/or the second electronic device 340 may perform the scan operation according to execution of a multi-user content. In another example, the first electronic device 320 and/or the second electronic device 340 may perform the scan operation to generate a P2P group.

In an embodiment, in action 607, the first electronic device 320 and the second electronic device 340 may generate a P2P group. In an embodiment, the first electronic device 320 and the second electronic device 340 may negotiate about roles of a P2P group owner (GO) and a P2P client. For example, when the first electronic device 320 operates as a P2P GO, the second electronic device 340 may operate as a P2P client. In another embodiment, when two or more electronic devices generate a P2P group, only one electronic device may operate as a P2P GO, and the other electronic devices may operate as P2P clients. In an embodiment, when the first electronic device 320 operates as the P2P GO, the first electronic device 320 may request identification information (for example, an ID) of the second electronic device 340 from the second electronic device 340, and in response to the request, the first electronic device 320 may receive the identification information (ID) from the second electronic device 340.

In an embodiment, in action 609, the first electronic device 320 may perform P2P communication with the second electronic device 340. In an embodiment, P2P communication may include P2P communication performed through a WLAN communication channel. In an embodiment, the WLAN may support a dual band to be able to output signals of two frequency bands (for example, 2.4 GHz and 5 GHz). In another embodiment, the WLAN may support a multi-band to be able to output signals of a plurality of frequency bands (for example, 2. 4 GHz, 5 GHz, and 60 GHz).

In another embodiment, after generating the P2P group and performing P2P communication, the first electronic device 320 and the second electronic device 340 may perform a position setup step of acquiring position information of the first electronic device 320 and position information of the second electronic device 340. In an embodiment, in action 611, the first electronic device 320 may transmit an initial echo request to the second electronic device 340 through P2P communication. The initial echo request may be referred to as an early echo request or a first echo request. In an embodiment, the initial echo request may include a request for position information and/or motion information of the second electronic device 340. In still another embodiment, the initial echo request may include not only the request for the position information and/or the motion information of the second electronic device 340, but also position information of the first electronic device 320.

In an embodiment, in action 613, the first electronic device 320 may receive position information of the second electronic device at a second time point from the second electronic device 340. In an embodiment, the second time point may correspond to a time point at which the second electronic device 340 receives the initial echo request after the first electronic device 320 and the second electronic device 340 connect P2P communication through a P2P channel. In an embodiment, the first electronic device 320 may receive motion information of the second user 330 from the second electronic device 340 through the P2P communication, along with the position information of the second electronic device 340 at the second time point. For example, the motion information may include a stationary state, a sedentary state, or a moving state of the second user 330.

In an embodiment, in action 615, the first electronic device 320 may calculate a relative position of the second electronic device 340 to the first electronic device 320, based on the position information of the second electronic device which is received from the second electronic device 340.

In an embodiment, in action 617, the first electronic device 320 may transmit an echo request to the second electronic device 340. In an embodiment, the echo request may include a request for position information and/or motion information of the second electronic device, and may include the relative position information of the second electronic device 340 to the first electronic device 320, which is calculated in action 615, and updated position information of the first electronic device 320. In an embodiment, the first electronic device 320 may transmit the initial echo request to the second electronic device 340 in action 611, and, after a designated time is elapsed, the first electronic device 320 may transmit the echo request. The echo request transmitted after the designated time is elapsed may be referred to as a second echo request. In an embodiment, the first electronic device 320 may transmit the echo request through a frame rate, and the frame rate may be a constant value or a variable value. However, in various embodiments, the first electronic device 320 may transmit the echo request as the first electronic device 320 moves, the second electronic device 340 moves, or the first electronic device 320 and/or the second electronic device 340 performs a specific motion. In an embodiment, in action 619, the first electronic device 320 may receive position information of the second electronic device at a third time point from the second electronic device 340. In another embodiment, even when the second electronic device 340 does not receive the echo request from the first electronic device 320, the second electronic device 340 may transmit a position request to the first electronic device 320. For example, when the second electronic device 340 needs position information of the first electronic device 320, but does not receive the echo request from the first electronic device 320, the second electronic device 340 may transmit the position request to the first electronic device 320. In an embodiment, the second electronic device 340 may transmit the position request to the first electronic device 320 at intervals. The intervals at which the position request is transmitted may be changed according to motion information of the second user 330. For example, when the second user 330 is in a stationary state, the second user 330 may transmit the position request at intervals of 5 seconds, but when the second user 330 is in a moving state, the second user 330 may transmit the position request at intervals of 1 second.

FIG. 6 illustrates the embodiment in which the first electronic device 320 performs the role of the P2P group owner (GO) and the second electronic device 340 performs the role of the P2P client, but a plurality of electronic devices may perform the role of the P2P client in P2P communication. For example, when the first electronic device 320, the second electronic device 340, and a third electronic device (not shown) perform P2P communication, and the first electronic device 320 performs the role of the P2P GO, the second electronic device 340 and the third electronic device (not shown) may perform the role of the P2P client.

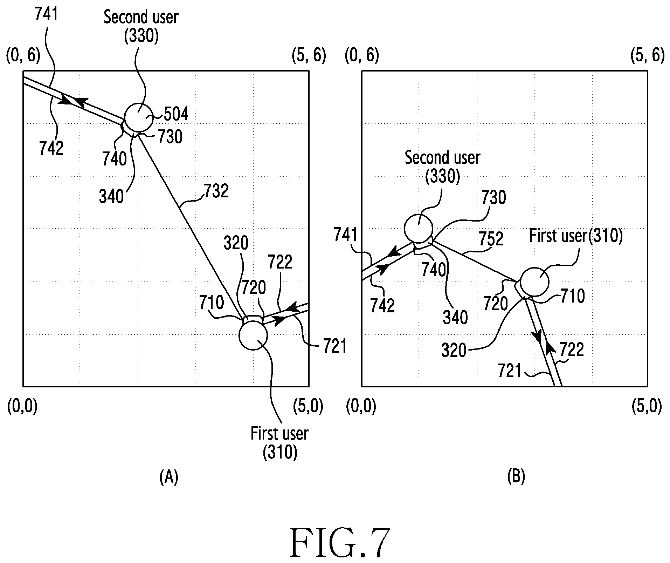

FIG. 7 illustrates a position tracking state of a first user and a second user at a step of executing a multi-user content according to an embodiment. The coordinate system of FIG. 7 is illustrated as a two-dimensional orthogonal coordinate system for convenience of explanation, but an electronic device (for example, the first electronic device 320 or the second electronic device 340) may perform calculation to acquire position information of a user (or an electronic device) through a 3D orthogonal coordinate system, a 3D spherical coordinate system, or a 3D cylindrical coordinate system.

A case (a) of FIG. 7 illustrates a position state of the first user 310 and the second user 330 right after communication connection is performed through a P2P channel. For example, the case (a) of FIG. 7 corresponds to a position state at the second time point at which action 613 of FIG. 6 is performed.

Referring to the case (a) of FIG. 7, the first electronic device 320 and the second electronic device 340 may perform a communication connection 732 through a P2P channel. For example, the first electronic device 320 may perform the P2P communication connection 732 through an antenna module 710 that is close to the second electronic device 340 among two antenna modules 710, 720. The second electronic device 340 may perform the P2P communication connection 732 through an antenna module 730 that is close to the first electronic device 320 among two antenna modules 730, 740. In an embodiment, the first electronic device 320 and the second electronic device 340 may acquire position information of the first electronic device 320 and the second electronic device 340, respectively, through antenna modules that do not perform the P2P communication connection 732 through the P2P channel. For example, the first electronic device 320 may transmit a signal for measuring a position or a distance through the antenna module 720 that is not close to the second electronic device 340, and may acquire position information of the first electronic device 320 through a reflection signal 722 which is reflected from an external object and is received. The second electronic device 340 may transmit a signal 741 for measuring a position or a distance through the antenna module 740 that is not close to the first electronic device 320, and may acquire position information of the second electronic device 340 through a reflection signal 742 which is reflected from an external object and is received.

In an embodiment, the first electronic device 320 may acquire the position information of the first electronic device 320 through the antenna module 720 that is not close to the second electronic device 340, and may receive the position information of the second electronic device 340 from the second electronic device through the antenna module 710 that is close to the second electronic device 340. For example, the first electronic device 320 may acquire position information (for example, coordinates (4, 1)) of the first electronic device 320 through the antenna module 720 that is not close to the second electronic device 340 at the second time point. In addition, the first electronic device 320 may receive, from the second electronic device, position information (for example, coordinate (2, 5)) of the second electronic device 340 through the antenna module 710 that is close to the second electronic device 340 at the second time point. According to an embodiment, the first electronic device 320 may separate the antenna module for performing P2P communication and the antenna module for acquiring position information. For example, the first electronic device may perform P2P communication with the second electronic device 340 through the antenna module 710, and may acquire position information of the first electronic device through the antenna module 720. According to an embodiment, the first electronic device 320 may temporarily use the antenna module for performing P2P communication, as an antenna module for acquiring position information. For example, when the first electronic device 320 needs to acquire exact position information of the first electronic device 320 and/or the second electronic device 340, the first electronic device 320 may acquire position information through the antenna module for performing P2P communication for a designated time.

In an embodiment, the first electronic device 320 which receives the position information of the second electronic device 340 may calculate a relative position of the second electronic device 340 at the second time point, and may transmit the relative position to the second electronic device 340. For example, the first electronic device 320 may calculate the relative position (for example, relative coordinates (-2, 4)) of the second electronic device 340, according to the position information of the first electronic device 320 and the second electronic device 340 acquired, and may transmit the result of calculating to the second electronic device 340. In an embodiment, even when it is impossible to acquire position information through the antenna module of the second electronic device 340, the second electronic device 340 may perform position tracking, based on a relative position value received from the first electronic device 320.

A case (b) of FIG. 7 illustrates a position state of the first user 310 (or the first electronic device 320) and the second user 330 (or the second electronic device 340) in which motions occur according to execution of a multi-user content. For example, the case (b) of FIG. 7 may correspond to a position state at the third time point at which action 619 of FIG. 6 is performed.

Referring to the case (b) of FIG. 7, the position and the direction of the first electronic device 320 may be changed according to a motion of the user after the multi-user content is executed, and accordingly, the antenna module for performing P2P communication with the second electronic device 340 may be changed. For example, in the case (a) of FIG. 7, the first electronic device 320 may perform the P2P communication connection 732 with the second electronic device 340 through the antenna module 710, but in the case (b) of FIG. 7, the first electronic device 320 may perform a P2P communication connection 752 with the second electronic device through the antenna module 720.

In an embodiment, the first electronic device 320 may acquire position information of the first electronic device 320 through the antenna module 710 that is not close to the second electronic device 340, and may receive position information of the second electronic device 340 from the second electronic device 340 through the antenna module 720 that is close to the second electronic device 340. For example, the first electronic device 320 may transmit the signal 721 for measuring a position or a distance through the antenna module 710 that is not close to the second electronic device 340 at the third time point, and may acquire position information (for example, coordinates (3, 2)) of the first electronic device 320, based on the reflection signal 722 which is reflected from an external object and is received. In addition, the first electronic device 320 may receive position information (for example, coordinates (1, 3)) of the second electronic device 340 from the second electronic device 340 through the antenna module 720 that is close to the second electronic device 340 at the third time point. In various embodiments, the antenna module 720 and the second electronic device 340 being close to each other may mean that a line of sight (LOS) is guaranteed between the antenna module 720 and the second electronic device 340.

In an embodiment, the first electronic device 320 which receives the position information of the second electronic device 340 may calculate a relative position of the second electronic device 340 at the third time point, and may transmit the relative position to the second electronic device 340. For example, the first electronic device 320 may calculate the relative position (for example, relative coordinates (-2, 1)) of the second electronic device 340 according to the position information of the first electronic device 320 and the second electronic device 340 acquired, and may transmit the relative position to the second electronic device 340.

The cases (a) and (b) of FIG. 7 illustrate motions of the first user 310 and the second user 330 on planar coordinates which are fixed to an external environment, but in another embodiment, the first electronic device 320 may generate new coordinates data reflecting a motion of the first user 310 from a view point of the first user 310. In addition, the second electronic device 340 may generate new coordinates data reflecting a motion of the second user 330 from a view point of the second user 330. In an embodiment, the motions of the first user 310 and the second user 330 may include rotation about an axis. For example, when the first user 310 rotates to the right by 20°, the first electronic device 320 may generate new coordinates for a surrounding environment, by reflecting the rotation angle of the first user 310. In addition, the first electronic device 320 may calculate a relative position of the second user 330 based on the newly generated coordinates. For example, relative coordinates of the second user 330 to the first user 310 on coordinates fixed to an external environment may be (-2, 1), but on coordinates newly generated from the view point of the first user 310, relative coordinates of the second user 330 may be (2, 1).

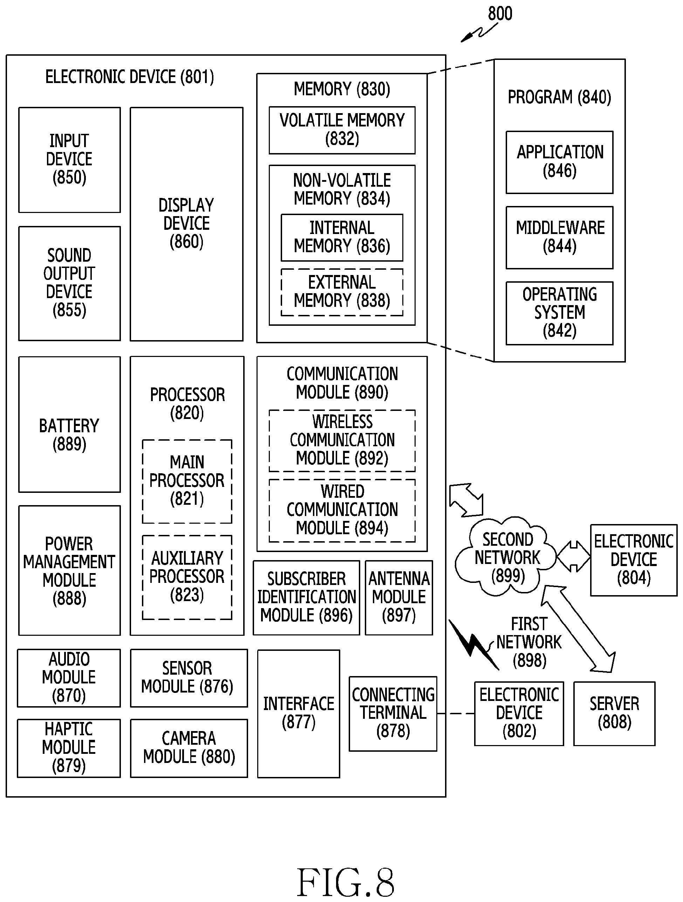

FIG. 8 is a block diagram of an electronic device in a network environment according to an embodiment.

Fig. 8 is a block diagram illustrating an electronic device 801 in a network environment 800 according to various embodiments. Referring to Fig. 8, the electronic device 801 in the network environment 800 may communicate with an electronic device 802 via a first network 898 (e.g., a short-range wireless communication network), or an electronic device 804 or a server 808 via a second network 899 (e.g., a long-range wireless communication network). According to an embodiment, the electronic device 801 may communicate with the electronic device 804 via the server 808. According to an embodiment, the electronic device 801 may include a processor 820, memory 830, an input device 850, a sound output device 855, a display device 860, an audio module 870, a sensor module 876, an interface 877, a haptic module 879, a camera module 880, a power management module 888, a battery 889, a communication module 890, a subscriber identification module(SIM) 896, or an antenna module 897. In some embodiments, at least one (e.g., the display device 860 or the camera module 880) of the components may be omitted from the electronic device 801, or one or more other components may be added in the electronic device 801. In some embodiments, some of the components may be implemented as single integrated circuitry. For example, the sensor module 876 (e.g., a fingerprint sensor, an iris sensor, or an illuminance sensor) may be implemented as embedded in the display device 860 (e.g., a display).

The processor 820 may execute, for example, software (e.g., a program 840) to control at least one other component (e.g., a hardware or software component) of the electronic device 801 coupled with the processor 820, and may perform various data processing or computation. According to one embodiment, as at least part of the data processing or computation, the processor 820 may load a command or data received from another component (e.g., the sensor module 876 or the communication module 890) in volatile memory 832, process the command or the data stored in the volatile memory 832, and store resulting data in non-volatile memory 834. According to an embodiment, the processor 820 may include a main processor 821 (e.g., a central processing unit (CPU) or an application processor (AP)), and an auxiliary processor 823 (e.g., a graphics processing unit (GPU), an image signal processor (ISP), a sensor hub processor, or a communication processor (CP)) that is operable independently from, or in conjunction with, the main processor 821. Additionally or alternatively, the auxiliary processor 823 may be adapted to consume less power than the main processor 821, or to be specific to a specified function. The auxiliary processor 823 may be implemented as separate from, or as part of the main processor 821.

The auxiliary processor 823 may control at least some of functions or states related to at least one component (e.g., the display device 860, the sensor module 876, or the communication module 890) among the components of the electronic device 801, instead of the main processor 821 while the main processor 821 is in an inactive (e.g., sleep) state, or together with the main processor 821 while the main processor 821 is in an active state (e.g., executing an application). According to an embodiment, the auxiliary processor 823 (e.g., an image signal processor or a communication processor) may be implemented as part of another component (e.g., the camera module 880 or the communication module 890) functionally related to the auxiliary processor 823.

The memory 830 may store various data used by at least one component (e.g., the processor 820 or the sensor module 876) of the electronic device 801. The various data may include, for example, software (e.g., the program 840) and input data or output data for a command related thererto. The memory 830 may include the volatile memory 832 or the non-volatile memory 834.

The program 840may be stored in the memory 830 as software, and may include, for example, an operating system (OS) 842, middleware 844, or an application 846.

The input device 850 may receive a command or data to be used by other component (e.g., the processor 820) of the electronic device 801, from the outside (e.g., a user) of the electronic device 801. The input device 850 may include, for example, a microphone, a mouse, a keyboard, or a digital pen (e.g., a stylus pen).

The sound output device 855 may output sound signals to the outside of the electronic device 801. The sound output device 855 may include, for example, a speaker or a receiver. The speaker may be used for general purposes, such as playing multimedia or playing record, and the receiver may be used for an incoming calls. According to an embodiment, the receiver may be implemented as separate from, or as part of the speaker.

The display device 860 may visually provide information to the outside (e.g., a user) of the electronic device 801. The display device 860 may include, for example, a display, a hologram device, or a projector and control circuitry to control a corresponding one of the display, hologram device, and projector. According to an embodiment, the display device 860 may include touch circuitry adapted to detect a touch, or sensor circuitry (e.g., a pressure sensor) adapted to measure the intensity of force incurred by the touch.

The audio module 870 may convert a sound into an electrical signal and vice versa. According to an embodiment, the audio module 870 may obtain the sound via the input device 850, or output the sound via the sound output device 855 or a headphone of an external electronic device (e.g., an electronic device 802) directly (e.g., wiredly) or wirelessly coupled with the electronic device 801.

The sensor module 876 may detect an operational state (e.g., power or temperature) of the electronic device 801 or an environmental state (e.g., a state of a user) external to the electronic device 801, and then generate an electrical signal or data value corresponding to the detected state. According to an embodiment, the sensor module 876 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 877 may support one or more specified protocols to be used for the electronic device 801 to be coupled with the external electronic device (e.g., the electronic device 802) directly (e.g., wiredly) or wirelessly. According to an embodiment, the interface 877 may include, for example, a high definition multimedia interface (HDMI), a universal serial bus (USB) interface, a secure digital (SD) card interface, or an audio interface.

A connecting terminal 878 may include a connector via which the electronic device 801 may be physically connected with the external electronic device (e.g., the electronic device 802). According to an embodiment, the connecting terminal 878 may include, for example, a HDMI connector, a USB connector, a SD card connector, or an audio connector (e.g., a headphone connector).

The haptic module 879 may convert an electrical signal into a mechanical stimulus (e.g., a vibration or a movement) or electrical stimulus which may be recognized by a user via his tactile sensation or kinesthetic sensation. According to an embodiment, the haptic module 879 may include, for example, a motor, a piezoelectric element, or an electric stimulator.

The camera module 880 may capture a still image or moving images. According to an embodiment, the camera module 880 may include one or more lenses, image sensors, image signal processors, or flashes.

The power management module 888 may manage power supplied to the electronic device 801. According to one embodiment, the power management module 888 may be implemented as at least part of, for example, a power management integrated circuit (PMIC).

The battery 889 may supply power to at least one component of the electronic device 801. According to an embodiment, the battery 889 may include, for example, a primary cell which is not rechargeable, a secondary cell which is rechargeable, or a fuel cell.

The communication module 890 may support establishing a direct (e.g., wired) communication channel or a wireless communication channel between the electronic device 801 and the external electronic device (e.g., the electronic device 802, the electronic device 804, or the server 808) and performing communication via the established communication channel. The communication module 890 may include one or more communication processors that are operable independently from the processor 820 (e.g., the application processor (AP)) and supports a direct (e.g., wired) communication or a wireless communication. According to an embodiment, the communication module 890 may include a wireless communication module 892 (e.g., a cellular communication module, a short-range wireless communication module, or a global navigation satellite system (GNSS) communication module) or a wired communication module 894 (e.g., a local area network (LAN) communication module or a power line communication (PLC) module). A corresponding one of these communication modules may communicate with the external electronic device via the first network 898 (e.g., a short-range communication network, such as Bluetooth^{™}, wireless-fidelity (Wi-Fi) direct, or infrared data association (IrDA)) or the second network 899 (e.g., a long-range communication network, such as a cellular network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 892 may identify and authenticate the electronic device 801 in a communication network, such as the first network 898 or the second network 899, using subscriber information (e.g., international mobile subscriber identity (IMSI)) stored in the subscriber identification module 896.

The antenna module 897 may transmit or receive a signal or power to or from the outside (e.g., the external electronic device) of the electronic device 801. According to an embodiment, the antenna module 897 may include an antenna including a radiating element composed of a conductive material or a conductive pattern formed in or on a substrate (e.g., PCB). According to an embodiment, the antenna module 897 may include a plurality of antennas. In such a case, at least one antenna appropriate for a communication scheme used in the communication network, such as the first network 898 or the second network 899, may be selected, for example, by the communication module 890 (e.g., the wireless communication module 892) from the plurality of antennas. The signal or the power may then be transmitted or received between the communication module 890 and the external electronic device via the selected at least one antenna. According to an embodiment, another component (e.g., a radio frequency integrated circuit (RFIC)) other than the radiating element may be additionally formed as part of the antenna module 897.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 801 and the external electronic device 804 via the server 808 coupled with the second network 899. Each of the electronic devices 802 and 804 may be a device of a same type as, or a different type, from the electronic device 801. According to an embodiment, all or some of operations to be executed at the electronic device 801 may be executed at one or more of the external electronic devices 802, 804, or 808. For example, if the electronic device 801 should perform a function or a service automatically, or in response to a request from a user or another device, the electronic device 801, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 801. The electronic device 801 may provide the outcome, with or without further processing of the outcome, as at least part of a reply to the request. To that end, a cloud computing, distributed computing, or client-server computing technology may be used, for example.

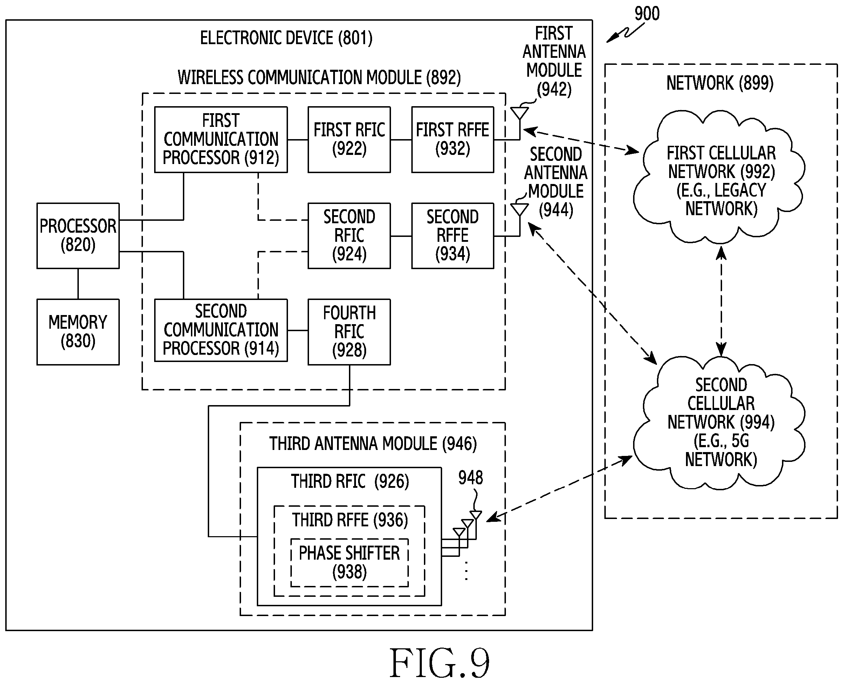

FIG. 9 is a block diagram 900 of an electronic device which supports legacy network communication and 5G network communication according to various embodiments.

Referring to FIG. 9, the electronic device 801 may include a first communication processor 912, a second communication processor 914, a first radio frequency integrated circuit (RFIC) 922, a second RFIC 924, a third RFIC 926, a fourth RFIC 928, a first radio frequency front end (RFFE) 932, a second RFFE 934, a first antenna module 942, a second antenna module 944, and an antenna 948. The electronic device 801 may further include a processor 820 and a memory 830. A network 899 may include a first network 992 and a second network 994. According to another embodiment, the electronic device 801 may further include at least one of the components illustrated in FIG. 8, and the network 899 may further include at least one other network. According to an embodiment, the first communication processor 912, the second communication processor 914, the first RFIC 922, the second RFIC 924, the fourth RFIC 928, the first RFFE 932, and the second RFFE 934 may form at least part of a wireless communication module 892. According to another embodiment, the fourth RFIC 928 may be omitted or may be included as part of the third RFIC 926.

The first communication processor 912 may establish a communication channel of a band to be used for wireless communication with the first network 992, and may support legacy network communication via the established communication channel. According to various embodiments, the first network may be a legacy network including a second generation (2G), 3G, 4G, or long term evolution (LTE) network. The second communication processor 914 may establish a communication channel corresponding to a designated band (for example, about 6 GHz to about 60 GHz) among bands to be used for wireless communication with the second network 994, and may support 5G network communication via the established communication channel. According to various embodiments, the second network 994 may be a 5G network which is defined in 3GPP. Additionally, according to an embodiment, the first communication processor 912 or the second communication processor 914 may establish a communication channel corresponding to another designated band (for example, about 6 GHz or lower) among the bands to be used for wireless communication with the second network 994, and may support 5G network communication via the established communication channel. According to an embodiment, the first communication processor 912 and the second communication processor 914 may be implemented within a single chip or a single package. According to various embodiments, the first communication processor 912 or the second communication processor 914 may be formed within a single chip or a single package, with the processor 820, the auxiliary processor 823, or the communication module 890 of FIG. 8.

When transmitting signals, the first RFIC 922 may convert a baseband signal, which is generated by the first communication processor 912, into a radio frequency (RF) signal of about 700 MHz to about 3 GHz to be used in the first network 992 (for example, a legacy network). When signals are received, an RF signal may be acquired from the first network 992 (for example, the legacy network) via an antenna (for example, the first antenna module 942), and may be pre-processed through an RFFE (for example, the first RFFE 932). The first RFIC 922 may convert the pre-processed RF signal into a baseband signal to be processed by the first communication processor 912.

When transmitting signals, the second RFIC 924 may convert a baseband signal, which is generated by the first communication processor 912 or the second communication processor 914, into an RF signal (hereinafter, a 5G Sub6 RF signal) of a Sub6 band (for example, about 6 GHz or lower) to be used in the second network 994 (for example, a 5G network). When signals are received, a 5G Sub6 RF signal may be acquired from the second network 994 (for example, the 5G network) via an antenna (for example, the second antenna module 944), and may be pre-processed through an RFFE (for example, the second RFFE 934). The second RFIC 924 may convert the pre-processed 5G Sub6 RF signal into a baseband signal to be processed by a corresponding communication processor among the first communication processor 912 or the second communication processor 914.

The third RFIC 926 may convert a baseband signal, which is generated by the second communication processor 914, into an RF signal (hereinafter, a 5G Above6 RF signal) of a 5G Above6 band (for example, about 6 GHz to about 60 GHz) to be used in the second network 994 (for example, the 5G network). When signals are received, a 5G Above6 RF signal may be acquired from the second network 994 (for example, the 5G network) via an antenna (for example, the antenna 948), and may be pre-processed through the third RFFE 936. The third RFIC 926 may convert the pre-processed 5G Above6 RF signal into a baseband signal to be processed by the second communication processor 914. According to an embodiment, the third RFFE 936 may be formed as part of the third RFIC 926.

According to an embodiment, the electronic device 801 may include the fourth RFIC 928 separately from or as part of the third RFIC 926. In this case, the fourth RFIC 928 may convert a baseband signal, which is generated by the second communication processor 914, into an RF signal of an intermediate frequency band (for example, about 9 GHz to about 11 GHz) (hereinafter, an IF signal), and then may transfer the IF signal to the third RFIC 926. The third RFIC 926 may convert the IF signal into a 5G Above6 RF signal. When signals are received, a 5G Above6 RF signal may be received from the second network 994 (for example, the 5G network) via an antenna (for example, the antenna 948), and may be converted into an IF signal by the third RFIC 926. The fourth RFIC 928 may convert the IF signal into a baseband signal to be processed by the second communication processor 914.

According to an embodiment, the first RFIC 922 and the second RFIC 924 may be implemented as part of a single chip or single package. According to an embodiment, the first RFFE 932 and the second RFFE 934 may be implemented as part of a single chip or a single package. According to an embodiment, at least one antenna module of the first antenna module 942 or the second antenna module 944 may be omitted, or may be coupled with another antenna module to process RF signals of a plurality of corresponding frequency bands.

According to an embodiment, the third RFIC 926 and the antenna 948 may be disposed on the same substrate to form a third antenna module 946. For example, the wireless communication module 892 or the processor 820 may be disposed on a first substrate (for example, a main PCB). In this case, the third antenna module 946 may be formed by the third RFIC 226 being disposed on an area (for example, a lower surface) of a second substrate (for example, a sub PCB) separate from the first substrate, and the antenna 948 being disposed on another area (for example, an upper surface). The third RFIC 926 and the antenna 948 may be disposed on the same substrate, so that a length of a transmission line therebetween may be reduced. This may reduce loss (for example, attenuation) of a signal of a high frequency band (for example, about 6 GHz to about 60 GHz) used for 5G network communication, which is caused by a transmission line. Accordingly, the electronic device 801 may enhance quality or speed of communication with the second network 994 (for example, the 5G network).

According to an embodiment, the antenna 948 may be formed as an antenna array including a plurality of antenna elements to be used for beamforming. In this case, the third RFIC 926 may include a plurality of phase shifters 938 corresponding to the plurality of antenna elements, as part of the third RFFE 936. When transmitting signals, the plurality of phase shifters 938 may shift phases of 5G Above6 RF signals to be transmitted to the outside (for example, a base station of the 5G network) of the electronic device 801 via corresponding antenna elements. When receiving signals, the plurality of phase shifters 238 may shift phases of 5G Above6 RF signals received from the outside through corresponding antenna elements to the same phases or substantially the same phases. This makes it possible to transmit or receive through beamforming between the electronic device 801 and the outside.

The second network 994 (for example, the 5G network) may be operated independently from the first network 992 (for example, the legacy network) (for example, stand-alone (SA)), or may be operated in conjunction therewith (for example, non-stand alone (NSA)). For example, the 5G network may include only an access network (for example, a 5G radio access network (RAN) or a next generation RAN (NG RAN)), and may not include a core network (for example, a next generation core (NGC)). In this case, after accessing the access network of the 5G network, the electronic device 801 may access an external network (for example, Internet) under control of the core network (for example, an evolved packed core (EPC)) of the legacy network. Protocol information (for example, LTE protocol information) for communication with the legacy network or protocol information (for example, new radio (NR) protocol information) for communication with the 5G network may be stored in the memory 830, and may be accessed by other components (for example, the processor 820, the first communication processor 912, or the second communication processor 914).

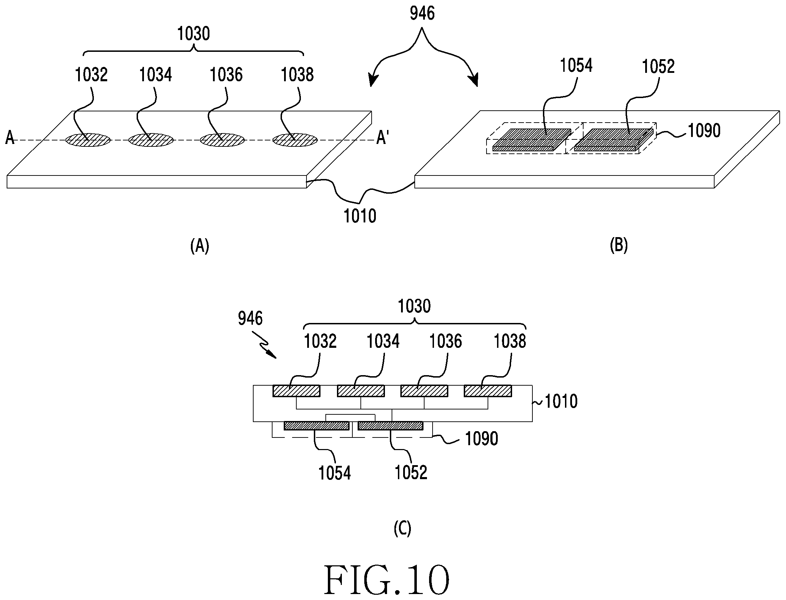

FIG. 10 illustrates a structure of an antenna module according to an embodiment.

For example, FIG. 10 illustrates an embodiment of a structure of the third antenna module 946 explained with reference to FIG. 9. FIG. 10A is a perspective view of the third antenna module 946 when viewed from one side, and FIG. 10B is a perspective view of the third antenna module 946 when viewed from the other side. FIG. 10C is a cross-sectional view of the third antenna module 946, taken on line A-A'.

Referring to FIG. 10, in an embodiment, the third antenna module 946 may include a printed circuit board 1010, an antenna array 1030, a radio frequency integrate circuit (RFIC) 1052, a power management integrate circuit (PMIC) 1054, a module interface (not shown). Selectively, the third antenna module 946 may further include a shielding member 1090. In other embodiments, at least one of the above-mentioned components may be omitted or at least two of the components may be integrally formed.

The printed circuit board 1010 may include a plurality of conductive layers, and a plurality of nonconductive layers which are stacked alternately with the conductive layers. The printed circuit board 1010 may provide an electric connection between various electronic components arranged on the printed circuit board 1010 and/or an outside by using wires and conductive vias which are formed on the conductive layers.

The antenna array 1030 (for example, 948 of FIG. 9) may include a plurality of antenna elements 1032, 1034, 1036, or 1038 arranged to form a directional beam. The antenna elements may be formed on a first surface of the printed circuit board 1010 as shown in the drawing. According to another embodiment, the antenna array 1030 may be formed inside the printed circuit board 1010. According to embodiments, the antenna array 1030 may include a plurality of antenna arrays of the same or different shapes or types (for example, dipole antenna arrays and/or patch antenna arrays).

The RFIC 1052 (for example, 926 of FIG. 9) may be disposed on another area (for example, a second surface opposite to the first surface) of the printed circuit board 1010, spaced apart from the antenna array 1030. The RFIC may be configured to process a signal of a selected frequency band, which is transmitted/received through the antenna array 1030. According to an embodiment, when transmitting signals, the RFIC 1052 may convert a baseband signal acquired from a communication processor (not shown) into an RF signal of a designated band. When receiving signals, the RFIC 1052 may convert an RF signal received via the antenna array 1030 into a baseband signal, and may transmit the baseband signal to the communication processor.

According to another embodiment, when transmitting signals, the RFIC 1052 may upconvert an IF signal (for example, about 9 GHz to about 11 GHz) acquired from an intermediate frequency integrate circuit (IFIC) (for example, 928 of FIG. 9) into an RF signal of a selected band. When receiving signals, the RFIC 1052 may down-convert an RF signal acquired via the antenna array 1030 into an IF signal, and may transmit the IF signal to the IFIC.

The PMIC 1054 may be disposed on another area (for example, the second surface) of the printed circuit board 1010, which is spaced apart from the antenna array. The PMIC may receive a voltage from a main PCB (not shown), and may provide necessary power to various components (for example, the RFIC 1052) on the antenna module.

The shielding member 1090 may be disposed on part (for example, the second surface) of the printed circuit board 1010 to electromagnetically shield at least one of the RFIC 1052 or the PMIC 1054. According to an embodiment, the shielding member 1090 may include a shield can.

In various embodiments, the third antenna module 946 may be electrically connected with another printed circuit board (for example, a main circuit board) through a module interface, although this is not illustrated. The module interface may include a connection member, for example, a coaxial cable connector, a board-to-board connector, an interposer, or a flexible printed circuit board (FPCB). The RFIC 1052 and/or the PMIC 1054 of the antenna module may be electrically connected with the printed circuit board through the connection member.

The electronic device according to various embodiments of the disclosure may be various types of electronic devices. The electronic device may include, for example, a portable communication device (for example, a smart phone), a computer device, a portable multimedia device, a portable medical device, a camera, a wearable device, or a home appliance. According to an embodiment of the disclosure, the electronic device is not limited to those described above.

It should be appreciated that various embodiments of the disclosure and the terms used therein are not intended to limit the technological features set forth herein to particular embodiments and include various changes, equivalents, or alternatives for a corresponding embodiment. With regard to the description of the drawings, similar reference numerals may be used to refer to similar or related elements. It is to be understood that a singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (for example, importance or order). It is to be understood that if an element (for example, a first element) is referred to, with or without the term "operatively" or "communicatively", as "coupled with," "coupled to," "connected with," or "connected to" another element (for example, a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an applicationspecific integrated circuit (ASIC).

Various embodiments of the disclosure may be implemented as software (for example, the program 840) including one or more instructions that are stored in a storage medium (for example, internal memory 836 or external memory 838) that is readable by a machine (for example, the electronic device 801). For example, a processor (for example, the processor 820) of the machine (for example, the electronic device 801) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (for example, an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (for example, compact disc read only memory (CD-ROM)), or be distributed (for example, downloaded or uploaded) online via an application store (for example, Play Store^{™}), or between two user devices (for example, smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (for example, a module or a program) of the above-described components may include a single entity or multiple entities. According to various embodiments, one or more of the above-described components or operations may be omitted, or one or more other components or operations may be added. Alternatively or additionally, a plurality of components (for example, modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (200, 320) comprising:
a camera (220);
a plurality of antenna modules (230);
a communication module (240) configured to perform wireless communication by using signals; and
at least one processor (210) operatively connected with the camera (220), the plurality of antenna modules (230), and the communication module (204),
wherein the at least one processor (210) is configured to:
acquire (401) signal information by receiving signals (280) resulting from reflection of signals (270) transmitted from the plurality of antenna modules by a surrounding environment;
acquire (403) a position of the electronic device (200, 320) based on the acquired signal information;
acquire (405) image information of an external electronic device (200, 340) through the camera (220) based on the signal information;
acquire (407) a position of the external electronic device (200, 340) at a first time point, based on the image information and the signal information;
perform (409) short-range communication with the external electronic device (200, 340), through a first antenna module that is close to the external electronic device (200, 340) among the plurality of antenna modules; and
receive (411) position information of the external electronic device (200, 340) at a second time point after the first time point from the external electronic device (200, 340) through the short-range communication.

2. The electronic device (200, 320) of any of claim 1, wherein the at least one processor (210) is configured to acquire a relative position of the external electronic device (200, 340) to the electronic device (200, 320), based on the position information of the external electronic device (200, 340) at the first time point and the second time point.

3. The electronic device (200, 320) of claim 2, wherein the at least one processor (210) is configured to transmit the acquired relative position of the external electronic device (200, 340) to the external electronic device (200, 340) through the short-range communication.

4. The electronic device (200, 320) of any of claims 1 to 3, wherein the at least one processor (210) is configured to acquire the position of the electronic device through a second antenna module that is not close to the external electronic device (200, 340) among the plurality of antenna modules.

5. The electronic device (200, 320) of any of claims 1 to 4, wherein, in performing the short-range communication with the external electronic device (200, 340) through the first antenna module, the at least one processor (210) is configured to:
scan the external electronic device (200, 340);
generate a P2P group with the scanned external electronic device (200, 340); and
perform P2P communication with the external electronic device (200, 340).

6. The electronic device of claim 1, wherein the at least one processor is configured to receive the position information of the at least one external electronic device at designated intervals after the second time point.

7. The electronic device (200, 320) of any of claims 1 to 6, wherein the at least one processor (210) is configured to receive motion information of a user wearing the external electronic device (200, 340) from the external electronic device (200, 340) through the short-range communication, along with the position information of the external electronic device (200, 340) at the second time.

8. The electronic device (200, 320) of claim 7, wherein the motion information comprises a stationary state, a sedentary state, a moving state of the user.

9. An operating method of an electronic device (200, 320), the method comprising:
acquiring (401) signal information by receiving signals (280) resulting from reflection of signals (270) transmitted from a plurality of antenna modules by a surrounding environment;
acquiring (403) a position of the electronic device (200, 320) based on the acquired signal information;
acquiring (405) image information of an external electronic device (200, 340) through a camera based on the signal information;
acquiring (407) a position of the external electronic device (200, 340) at a first time point, based on the image information and the signal information;
performing (409) short-range communication with the external electronic device (200, 340), through a first antenna module that is close to the external electronic device (200, 340) among the plurality of antenna modules; and
receiving (411) position information of the external electronic device (200, 340) at a second time point after the first time point from the external electronic device (200, 340) through the short-range communication.

10. The method of and of claim 9, further comprising acquiring a relative position of the external electronic device (200, 340) to the electronic device (200, 320), based on the position information of the external electronic device (200, 340) at the first time point and the second time point.

11. The method of claim 10, further comprising transmitting the acquired relative position of the external electronic device (200, 340) to the external electronic device (200, 340) through the short-range communication.

12. The method of any of claims 9 to 11, further comprising acquiring the position of the electronic device (200, 320) through a second antenna module that is not close to the external electronic device (200, 340) among the plurality of antenna modules.

13. The method of any of claims 9 to 12, wherein performing the short-range communication with the external electronic device (200, 340) through the first antenna module comprises:
scanning the external electronic device (200, 340);
generating a P2P group with the scanned external electronic device (200, 340); and
performing P2P communication with the external electronic device (200, 340).

14. The method of claim 9, further comprising receiving the position information of the at least one external electronic device at designated intervals after the second time point.

15. The method of any of claims 9 to 14, further comprising receiving motion information of a user wearing the external electronic device (200, 340) from the external electronic device (200, 340) through the short-range communication, along with the position information of the external electronic device (200, 340) at the second time.

## Patentansprüche

1. Elektronisches Gerät (200, 320), umfassend:
eine Kamera (220);
mehrere Antennenmodule (230);
ein Kommunikationsmodul (240), das dazu konfiguriert ist, eine drahtlose Kommunikation unter Verwendung von Signalen durchzuführen; und
mindestens einen Prozessor (210), der mit der Kamera (220), den mehreren Antennenmodulen (230) und dem Kommunikationsmodul (204) in Wirkverbindung steht,
wobei der mindestens eine Prozessor (210) dafür konfiguriert ist,
Erfassen (401) von Signalinformationen durch Empfangen von Signalen (280), die aus der Reflexion von Signalen (270) resultieren, die von den mehreren Antennenmodulen durch eine umliegende Umgebung übertragen werden;
Erfassen (403) einer Position des elektronischen Geräts (200, 320) auf der Grundlage der erfassten Signalinformationen;
Erfassen (405) von Bildinformationen eines externen elektronischen Geräts (200, 340) durch die Kamera (220) auf der Grundlage der Signalinformationen;
Erfassen (407) einer Position des externen elektronischen Geräts (200, 340) zu einem ersten Zeitpunkt auf der Grundlage der Bildinformationen und der Signalinformationen;
Durchführen (409) einer Kurzstreckenkommunikation mit dem externen elektronischen Gerät (200, 340) über ein erstes Antennenmodul, das sich unter den mehreren Antennenmodulen in der Nähe des externen elektronischen Geräts (200, 340) befindet; und
Empfangen (411) von Positionsinformationen des externen elektronischen Geräts (200, 340) zu einem zweiten Zeitpunkt nach dem ersten Zeitpunkt von dem externen elektronischen Gerät (200, 340) über die Kurzstreckenkommunikation.

2. Elektronisches Gerät (200, 320) nach einem der Ansprüche 1, wobei der mindestens eine Prozessor (210) dazu konfiguriert ist, eine relative Position des externen elektronischen Geräts (200, 340) zu dem elektronischen Gerät (200, 320) auf der Grundlage der Positionsinformationen des externen elektronischen Geräts (200, 340) zum ersten Zeitpunkt und zum zweiten Zeitpunkt zu erfassen.

3. Elektronisches Gerät (200, 320) nach Anspruch 2, wobei der mindestens eine Prozessor (210) dazu konfiguriert ist, die erfasste relative Position des externen elektronischen Geräts (200, 340) über die Kurzstreckenkommunikation an das externe elektronische Gerät (200, 340) zu übertragen.

4. Elektronisches Gerät (200, 320) nach einem der Ansprüche 1 bis 3, wobei der mindestens eine Prozessor (210) dazu konfiguriert ist, die Position des elektronischen Geräts über ein zweites Antennenmodul zu erfassen, das sich unter den mehreren Antennenmodulen nicht in der Nähe des externen elektronischen Geräts (200, 340) befindet.

5. Elektronisches Gerät (200, 320) nach einem der Ansprüche 1 bis 4, wobei bei der Durchführung der Kurzstreckenkommunikation mit dem externen elektronischen Gerät (200, 340) über das erste Antennenmodul der mindestens eine Prozessor (210) dazu konfiguriert ist,
das externe elektronische Gerät (200, 340) zu scannen;
eine P2P-Gruppe mit dem gescannten externen elektronischen Gerät (200, 340) zu erzeugen; und eine P2P-Kommunikation mit dem externen elektronischen Gerät (200, 340) durchzuführen.

6. Elektronisches Gerät nach Anspruch 1, wobei der mindestens eine Prozessor dazu konfiguriert ist, die Positionsinformationen des mindestens einen externen elektronischen Geräts in festgelegten Intervallen nach dem zweiten Zeitpunkt zu empfangen.

7. Elektronisches Gerät (200, 320) nach einem der Ansprüche 1 bis 6, wobei der mindestens eine Prozessor (210) dazu konfiguriert ist, Bewegungsinformationen eines Benutzers, der das externe elektronische Gerät (200, 340) trägt, zusammen mit den Positionsinformationen des externen elektronischen Geräts (200, 340) zum zweiten Zeitpunkt über die Kurzstreckenkommunikation vom externen elektronischen Gerät (200, 340) zu empfangen.

8. Elektronisches Gerät (200, 320) nach Anspruch 7, wobei die Bewegungsinformationen einen stationären Zustand, einen sitzenden Zustand und einen Bewegungszustand des Benutzers umfassen.

9. Verfahren zum Betreiben eines elektronischen Geräts (200, 320), wobei das Verfahren Folgendes umfasst:
Erfassen (401) von Signalinformationen durch Empfangen von Signalen (280), die aus der Reflexion von Signalen (270) resultieren, die von mehreren Antennenmodulen durch eine umliegende Umgebung übertragen werden;
Erfassen (403) einer Position des elektronischen Geräts (200, 320) auf der Grundlage der erfassten Signalinformationen;
Erfassen (405) von Bildinformationen eines externen elektronischen Geräts (200, 340) durch eine Kamera auf der Grundlage der Signalinformationen;
Erfassen (407) einer Position des externen elektronischen Geräts (200, 340) zu einem ersten Zeitpunkt auf der Grundlage der Bildinformationen und der Signalinformationen;
Durchführen (409) einer Kurzstreckenkommunikation mit dem externen elektronischen Gerät (200, 340) über ein erstes Antennenmodul, das sich unter den mehreren Antennenmodulen in der Nähe des externen elektronischen Geräts (200, 340) befindet; und
Empfangen (411) von Positionsinformationen des externen elektronischen Geräts (200, 340) zu einem zweiten Zeitpunkt nach dem ersten Zeitpunkt von dem externen elektronischen Gerät (200, 340) über die Kurzstreckenkommunikation.

10. Verfahren nach Anspruch 9, umfassend ferner das Erfassen einer relativen Position des externen elektronischen Geräts (200, 340) zu dem elektronischen Gerät (200, 320), basierend auf den Positionsinformationen des externen elektronischen Geräts (200, 340) zum ersten Zeitpunkt und zum zweiten Zeitpunkt.

11. Verfahren nach Anspruch 10, umfassend ferner das Übertragen der erfassten relativen Position des externen elektronischen Geräts (200, 340) über die Kurzstreckenkommunikation an das externe elektronische Gerät (200, 340).

12. Verfahren nach einem der Ansprüche 9 bis 11, umfassend ferner das Erfassen der Position des elektronischen Geräts (200, 320) über ein zweites Antennenmodul, das sich unter den mehreren Antennenmodulen nicht in der Nähe des externen elektronischen Geräts (200, 340) befindet.

13. Verfahren nach einem der Ansprüche 9 bis 12, wobei das Durchführen der Kurzstreckenkommunikation mit dem externen elektronischen Gerät (200, 340) über das erste Antennenmodul Folgendes umfasst:
Scannen des externen elektronischen Geräts (200, 340);
Erzeugen einer P2P-Gruppe mit dem gescannten externen elektronischen Gerät (200, 340); und Durchführen einer P2P-Kommunikation mit dem externen elektronischen Gerät (200, 340).

14. Verfahren nach Anspruch 9, umfassend ferner das Empfangen der Positionsinformationen des mindestens einen externen elektronischen Geräts in festgelegten Intervallen nach dem zweiten Zeitpunkt.

15. Verfahren nach einem der Ansprüche 9 bis 14, umfassend ferner das Empfangen von Bewegungsinformationen eines Benutzers, der das externe elektronische Gerät (200, 340) trägt, zusammen mit den Positionsinformationen des externen elektronischen Geräts (200, 340) zum zweiten Zeitpunkt von dem externen elektronischen Gerät (200, 340) über die Kurzstreckenkommunikation.

## Revendications

1. Un dispositif électronique (200, 320) comprenant :
une caméra (220);
une pluralité de modules d'antenne (230) ;
un module de communication (240) configuré pour réaliser une communication sans fil à l'aide de signaux ; et
au moins un processeur (210) raccordé fonctionnellement à la caméra (220), à la pluralité de modules d'antenne (230), et au module de communication (204),
dans lequel le au moins un processeur (210) est configuré pour :
acquérir (401) des informations de signaux en recevant des signaux (280) résultant de la réflexion de signaux (270) transmis depuis la pluralité de modules d'antennes par un environnement environnant ;
acquérir (403) la position du dispositif électronique (200, 320) en se basant sur les informations de signaux acquis ;
acquérir (405) les informations d'image d'un dispositif électronique externe (200, 340) via la caméra (220) en se basant les informations de signaux ;
acquérir (407) la position du dispositif électronique externe (200, 340) à premier point temporel, en se basant sur les informations d'image et les informations de signaux ;
réaliser (409) une communication de courte portée avec le dispositif électronique externe (200, 340), via un premier module d'antenne qui est proximal du dispositif électronique externe (200, 340) parmi la pluralité de modules d'antenne ; et
recevoir (411) les informations de position du dispositif électronique externe (200, 340) à un deuxième point temporel après le premier point temporel depuis le dispositif électronique externe (200, 340) via la communication de courte portée.

2. Un dispositif électronique (200, 320) selon l'une quelconque des revendications 1, dans lequel le au moins un processeur (210) est configuré pour acquérir une position relative du dispositif électronique externe (200, 340) au dispositif électronique (200, 320), en se basant sur les informations de position du dispositif électronique externe (200, 340) au premier point temporel et au deuxième point temporel.

3. Un dispositif électronique (200, 320) selon la revendication 2, dans lequel le au moins un processeur (210) est configuré pour transmettre la position relative acquise du dispositif électronique externe (200, 340) au dispositif électronique externe (200, 340) via la communication de courte portée.

4. Un dispositif électronique (200, 320) selon l'une quelconque des revendications 1 à 3, dans lequel le au moins un processeur (210) est configuré pour acquérir la position du dispositif électronique via un deuxième module d'antenne qui n'est pas proximal du dispositif électronique externe (200, 340) parmi la pluralité de modules d'antenne.

5. Un dispositif électronique (200, 320) selon l'une quelconque des revendications 1 à 4, dans lequel, réaliser une communication de courte portée avec le dispositif électronique externe (200, 340) via le premier module d'antenne, le au moins un processeur (210) est configuré pour :
scanner le dispositif électronique externe (200, 340) ;
générer un groupe P2P avec le dispositif électronique externe scanné (200, 340) ; et réaliser une communication P2P avec le dispositif électronique externe (200, 340).

6. Un dispositif électronique selon la revendication 1, dans lequel le au moins un processeur est configuré pour recevoir les informations de position du au moins un dispositif électronique externe à des intervalles désignés après le deuxième point temporel.

7. Un dispositif électronique (200, 320) selon l'une quelconque des revendications 1 à 6, dans lequel le au moins un processeur (210) est configuré pour recevoir les informations de mouvement d'un utilisateur portant le dispositif électronique externe (200, 340) depuis le dispositif électronique externe (200, 340) via la communication de courte portée, avec les informations de position du dispositif électronique externe (200, 340) au deuxième point temporel.

8. Un dispositif électronique (200, 320) selon la revendication 7, dans lequel les informations de mouvement comprennent un état stationnaire, un état sédentaire, un état en déplacement de l'utilisateur.

9. Un procédé opérationnel d'un dispositif électronique (200, 320), le procédé comprenant :
acquérir (401) des informations de signaux en recevant des signaux (280) résultant de la réflexion de signaux (270) transmis depuis la pluralité de modules d'antennes par un environnement environnant ;
acquérir (403) la position du dispositif électronique (200, 320) en se basant sur les informations de signaux acquis ;
acquérir (405) les informations d'image d'un dispositif électronique externe (200, 340) via la caméra (220) en se basant les informations de signaux ;
acquérir (407) la position du dispositif électronique externe (200, 340) à premier point temporel, en se basant sur les informations d'image et les informations de signaux ;
réaliser (409) une communication de courte portée avec le dispositif électronique externe (200, 340), via un premier module d'antenne qui est proximal du dispositif électronique externe (200, 340) parmi la pluralité de modules d'antenne ; et
recevoir (411) les informations de position du dispositif électronique externe (200, 340) à un deuxième point temporel après le premier point temporel depuis le dispositif électronique externe (200, 340) via la communication de courte portée.

10. Un procédé selon la revendication 9, comprenant en outre acquérir une position relative du dispositif électronique externe (200, 340) au dispositif électronique (200, 320), en se basant sur les informations de position du dispositif électronique externe (200, 340) au premier point temporel et au deuxième point temporel.

11. Un procédé selon la revendication 10, comprenant en outre transmettre la position relative acquise du dispositif électronique externe (200, 340) au dispositif électronique externe (200, 340) via la communication de courte portée.

12. Un procédé selon l'une quelconque des revendications 9 à 11, comprenant en outre acquérir la position du dispositif électronique (200, 320) via un deuxième module d'antenne qui n'est pas proximal du dispositif électronique externe (200, 340) parmi la pluralité de modules d'antenne.

13. Un procédé selon l'une quelconque des revendications 9 à 12, dans lequel réaliser une communication de courte portée avec le dispositif électronique externe (200, 340) via le premier module d'antenne comprend :
scanner le dispositif électronique externe (200, 340) ;
générer un groupe P2P avec le dispositif électronique externe scanné (200, 340) ; et réaliser une communication P2P avec le dispositif électronique externe (200, 340).

14. Un procédé selon la revendication 9, comprenant en outre recevoir les informations de position du au moins un dispositif électronique externe à des intervalles désignés après le deuxième point temporel.

15. Un procédé selon l'une quelconque des revendications 9 à 14, comprenant en outre recevoir les informations de mouvement d'un utilisateur portant le dispositif électronique externe (200, 340) depuis le dispositif électronique externe (200, 340) via la communication de courte portée, avec les informations de position du dispositif électronique externe (200, 340) au deuxième point temporel.
